# EUROPÄISCHE PATENTSCHRIFT

(11) **EP 4 196 376 B1**
(45) Veröffentlichungstag und Bekanntmachung des Hinweises auf die Patenterteilung: **09.09.2026**
(21) Anmeldenummer: 21751807.5
(22) Anmeldetag: 28.07.2021
(51) Int. Cl.: B60T 17/22, G01M 3/26, G01M 17/08

(54) **ÜBERWACHUNGS- UND MESSVORRICHTUNG UND VERFAHREN ZUR ÜBERWACHUNG UND ZUR MESSUNG VON KENNGRÖSSEN EINES LUFTVERSORGUNGSSYSTEMS VON FAHRZEUGEN, INSBESONDERE SCHIENENFAHRZEUGEN**
MONITORING AND MEASURING DEVICE, AND METHOD FOR MONITORING AND FOR MEASURING PARAMETERS OF AN AIR SUPPLY SYSTEM OF VEHICLES, IN PARTICULAR RAIL VEHICLES
DISPOSITIF DE SURVEILLANCE ET DE MESURE, ET PROCÉDÉ DE SURVEILLANCE ET DE MESURE DE PARAMÈTRES D'UN SYSTÈME D'ALIMENTATION EN AIR DE VÉHICULES, EN PARTICULIER DE VÉHICULES FERROVIAIRES

(30) Priorität: 11.08.2020 DE 102020210176
(43) Veröffentlichungstag der Anmeldung: 21.06.2023
(73) Patentinhaber: KNORR-BREMSE Systeme für Schienenfahrzeuge GmbH, 80809 München (DE)
(72) Erfinder: WINKLER, Michael, 80807 München (DE); GMATI, Anouar, 80804 München (DE); HERDEN, Marc-Oliver, 81377 München (DE); LINNER, Martin, 84419 Schwindeg (DE); SCHMID, Martin, 80636 München (DE); KIRMAYR, Alexander, 80687 München (DE)
(74) Vertreter: Prüfer & Partner mbB Patentanwälte · Rechtsanwälte
(86) Internationale Anmeldenummer: PCT/EP2021/071213
(87) Internationale Veröffentlichungsnummer: WO 2022/033880

(56) Entgegenhaltungen:
- EP-A1- 0 009 139
- EP-A2- 0 263 669
- CN-A- 109 374 229
- ANONYMOUS: "Überströmventil - Wikipedia", 16 April 2017 (2017-04-16), XP093341243, Retrieved from the Internet <URL:https://web.archive.org/web/20170416102425/https://de.wikipedia.org/wiki/Überströmventil>
- ANONYMOUS: "Rückschlagventile", 15 July 2024 (2024-07-15), Retrieved from the Internet <URL:https://web.archive.org/web/20240715104722/https://static.esska.de/shop/pdfdat_neu/85_armaturen/855773210102.pdf> [retrieved on 20251128]
- XP093341708

## Beschreibung

Die vorliegende Erfindung beschäftigt sich mit einer Überwachungs- und Messvorrichtung und einem Verfahren zur Überwachung und zur Messung von Kenngrößen eines Luftversorgungssystems eines Fahrzeugs, insbesondere eines Schienenfahrzeugs.

Luftversorgungsanlagen in Schienenfahrzeugen beinhalten verschiedene Behälter und Tanks, Kompressoren, Trocknervorrichtungen, Ventile, Leitungen und andere Armaturen. Die Luftversorgung bei Schienenfahrzeugen ist insbesondere wichtig für die Versorgung des Bremssystems mit Druckluft.

Fehler und Schäden in Luftversorgungsanlagen wie beispielsweise Leckagen, der Verschleiß von Kolbenringen, Ventilbrüche oder andere Defekte führen meist zu einer Verringerung der Lieferleistung des Luftversorgungssystems, nicht allerdings gleich zum totalen Ausfall.

Solche Störungen werden meist nicht sofort bemerkt, sodass die defekte Anlage weiter betrieben werden kann, was schwerwiegende Folgeschäden wie Ausfälle des Bremssystems oder aber einen überproportionalen Verschleiß hervorrufen kann.

Im Stand der Technik sind Überwachungssysteme für pneumatische Anlagen von Schienenfahrzeugen bekannt, bei welchen Drücke an verschiedenen Stellen gemessen werden können. Solche Überwachungssysteme sind daher entweder mit teuren oder aufwändigen Messvorrichtungen ausgestattet, welche den Volumenstrom von in Leitungen transportierten Luftmengen direkt misst, oder es wird versucht, mithilfe von Füllzeiten der Komponenten des gesamten Fahrzeugs eine Aussage über die Lieferleistung des Luftversorgungssystems zu treffen. Hierbei tritt allerdings das Problem auf, dass das gesamte Fahrzeug in einen definierten Betriebszustand gebracht werden muss, der Behälterdruck entsprechend bekannt sein muss und alle Verbraucher abgeschaltet sein müssen, was in der Realität schwer zu erreichen ist.

Ein weiteres Problem ist, dass sowohl lokbespannte Züge (wie Reisezugwagen, Güterwagen mit entsprechender Lokomotive) oder aber moderne Triebfahrzeuge nach Bedarf gekoppelt und entkoppelt werden, sodass verschiedene Gesamtvolumina von Komponenten des Luftversorgungssystems vorhanden sind. Zu einer Bestimmung der Lieferleistung eines Kompressors sowie der Detektion von Leckagen und anderen Fehlern gemäß Verfahren aus dem Stand der Technik müsste somit ein sich änderndes Gesamtvolumen berücksichtigt werden, welches sehr aufwändig zu vermessen wäre und was leicht zu Fehlern führen könnte.

Aus der EP 0 263 669 A2 ist eine Überwachungs- und Messvorrichtung bekannt, bei der bei Druckabnahmen mit einem vordefinierten Volumen (beispielsweise einem Lufttrockner) auf ein Leck geschlossen werden kann. Eine ähnliche Überwachungs- und Messvorrichtung ist beispielsweise auch aus der EP 0 009 139 A1 bekannt.

Es ist daher Aufgabe der vorliegenden Erfindung, eine zuverlässige und leicht zu realisierende Überwachungs- und Messvorrichtung für die Funktionalität des Luftversorgungssystems eines Schienenfahrzeugs sowie ein entsprechendes Verfahren bereit zu stellen.

Diese Aufgabe wird gelöst durch eine Überwachungs- und Messvorrichtung gemäß Anspruch 1 sowie durch ein Verfahren zur Überwachung und zur Messung von Kenngrößen eines Luftversorgungssystems gemäß Anspruch 6.

Weitere vorteilhafte Ausgestaltungen sind Gegenstand der abhängigen Ansprüche.

Eine erfindungsgemäße Überwachungs- und Messvorrichtung für ein Luftversorgungssystem eines Fahrzeugs, insbesondere Schienenfahrzeugs, umfasst: einen Kompressor, welcher dazu angepasst ist, Druckluft bereit zu stellen, ein definiertes Volumen, welches stromabwärts vom Kompressor angeordnet ist, sowie ein Absperrventil, welches wiederrum stromabwärts des definierten Volumens angeordnet ist und dazu eingerichtet, dass definierte Volumen abzusperren, sodass keine Luft entweichen kann, oder zu öffnen, dass ein Druckaustausch mit der Umgebung oder weiteren Fahrzeugkomponenten stattfinden kann. Die erfindungsgemäße Überwachungs- und Messvorrichtung umfasst ferner einen Drucksensor, welcher an einer beliebigen Position an der Druckleitung zwischen Kompressor und dem Absperrventil vorgesehen ist und dazu eingerichtet ist, den Druck, der sich im definierten Volumen aufbaut, zu messen, wobei das Absperrventil ein Überströmventil ist, welches dazu ausgebildet ist, ab dem Erreichen eines voreingestellten Solldrucks zu öffnen.

Verglichen mit Druckmessungen im gesamten System, welches sehr komplex ist und an welchem viele Verbraucher angeschlossen sind, kann erfindungsgemäß eine relativ einfache und zuverlässige Überwachung gewählt werden, welche vor allem regelmäßig und auch automatisch vorgenommen werden kann. Hierfür ist auch nur ein Drucksensor nötig. Die Druckänderung während der Füllzeit wird somit in einem relativ kleinen, aber klar definierten Volumen innerhalb des Luftversorgungssystems gemessen. Das definierte Volumen ändert sich auch nicht und bleibt konstant und ist für weitere Berechnungen konstant. Diese Messung ist also unabhängig von jeglichen Verbrauchern, welche an das Luftversorgungssystem angeschlossen sind.

Vorzugsweise weist die Überwachungs- und Messvorrichtung ferner eine Recheneinheit auf, welche dazu angepasst ist, auf Basis des Signals des Drucksensors eine Druckänderung über eine Füllzeit im definierten Volumen zu bestimmen, was sehr einfach und kostengünstig realisierbar ist.

Weiter vorzugsweise ist die Recheneinheit dazu angepasst, einen Volumenstrom des in das definierte Volumen strömenden Luftstroms zu bestimmen.

Gemäß der vorliegenden Erfindung ist für eine Volumenstrommessung kein spezieller Volumenstromsensor nötig, sondern der Volumenstrom wird lediglich mithilfe der Druckänderung im definierten Volumen über die Zeit berechnet. Hierzu ist ein Drucksensor ausreichend.

Aufgrund des sich über die Zeit aufbauenden Drucks im definierten Volumen kann der Volumenstrom rechnerisch bestimmt werden. Falls im Luftversorgungssystem ein Leck vorhanden sein sollte, würden sich im Volumenstrom Einbußen ergeben, da die Lieferleistung verkleinert würde.

Der Gesamtvolumenstrom ist der Unterschied des Luftvolumens, welcher in das definierte Volumen strömt, geteilt durch die Zeit, in welcher Druckluft eingefüllt wird. Die Änderung des Druckaufbaus, also die Druckänderung, steht somit in direktem Zusammenhang mit dem Volumenstrom und die Druckänderung ergibt aus dem Quotienten des gemessenen Druckunterschieds über die Zeit. Der Volumenstrom kann dann über die gemessene Druckänderung berechnet werden. Es muss dazu kein definierter Fahrzeugzustand hergestellt werden (also beispielsweise die Abschaltung von jeglichen Verbrauchern von Druckluft), und es ist auch kein kompliziertes Messequipment zur Messung der Lieferleistung, also von Volumenströmen nötig - der Volumenstrom kann also rechnerisch bestimmt werden.

Weiter vorzugsweise ist die Recheneinheit ferner dazu eingerichtet, ein Alarmsignal auszugeben, wenn die momentane Druckänderung sich nicht in einem vorbestimmten Bereich befindet oder sich der Druck nichtlinear ändert, also beispielsweise sprunghaft abfällt oder nichtlinear ansteigt. Da es die Hauptaufgabe einer Luftversorgungsanlage ist, komprimierte Luft in ausreichender Menge zu liefern, würde sich ein Fehler direkt auf die Lieferleistung auswirken, kann allerdings durch das erfindungsgemäße System identifiziert werden. Die Diagnosefähigkeit und eine Möglichkeit zur Vermeidung von folgeschweren Fehlern kann dadurch erheblich gesteigert werden und zusätzlicher Test- und Messaufwand am Fahrzeug ist nicht nötig beziehungsweise gut automatisierbar.

Weiter vorzugsweise ist das vorbestimmte Volumen das Volumen einer Lufttrocknungsvorrichtung. Diese ist geeignet, als definiertes Volumen verwendet zu werden, da das Volumen von Lufttrocknungsvorrichtungen bekannt ist und ferner vom momentanen Verbrauch der Verbraucher im System (beispielsweise Bremsen, Klimaanlage) unabhängig ist. Die Lufttrocknungsvorrichtung ist nämlich grundsätzlich mittels Ventilen vom restlichen Pneumatik-System des Zuges getrennt. Somit ist ein klar definiertes Volumen vorhanden.

Da in der Praxis mehrere Lufttrocknungsvorrichtungen parallel verwendet werden, ist in einer weiter bevorzugten Ausführungsform durch ein Schaltventil selektiv eine erste Lufttrocknungsvorrichtung und eine zweite Lufttrocknungsvorrichtung mit dem Kompressor verbindbar, und beide Lufttrocknungsvorrichtungen können als definiertes Volumen fungieren. Dann ist stromabwärts der ersten Lufttrocknungsvorrichtung ein erstes Ventil vorgesehen, zwischen Schaltventil und dem ersten Ventil ist ein erster Drucksensor vorgesehen (welcher dazu eingerichtet ist, den Druck in der ersten Lufttrocknungsvorrichtung zu messen), und stromabwärts der zweiten Lufttrocknungsvorrichtung ist ein zweites Ventil vorgesehen und zwischen dem Schaltventil des zweiten Ventils ist ein zweiter Drucksensor vorgesehen (welcher dazu eingerichtet ist, den Druck in der zweiten Lufttrocknungsvorrichtung zu messen).

Da für beide Lufttrocknungsvorrichtungen ein bekanntes Volumen und ein bekannter Ausgangsdruck definiert werden können, kann diese Druckmessung einfach in das bestehende System einer Lufttrocknungsanlage integriert werden.

Erfindungsgemäß sind das erste Ventil und das zweite Ventil (für den Fall, in welchem nur ein Ventil vorhanden ist, nur das erste Ventil) Überströmventile, welche ab dem Bereich eines voreingestellten Solldrucks einen Luftstrom durchlassen.

Ein wesentlicher Vorteil ist die einfache Ausführbarkeit des Systems, und mit einem oder zwei Drucksensor(en) kann eine einfache und zuverlässige Überwachung regelmäßig und automatisiert durchgeführt werden. Die Lufttrocknungsvorrichtung oder die Lufttrocknungsvorrichtungen sind mittels dieser Überströmventile vom restlichen Pneumatik-System des Zugs getrennt, aber bei Erreichen eines bestimmten Einstelldrucks öffnen diese Ventile und die Verbindung zum Fahrzeug wird hergestellt - und die Messung der Druckänderung kann automatisch beendet werden. Es kann also ein interner Druckaufbau in Höhe des Einstelldrucks des Überströmventils gemessen werden, und bis dieser erreicht ist, liegt stets ein abgeschlossenes und immer gleich bleibendes Volumen vor. Hierdurch wird Zeit eingespart, da kein separates Behältnis mit Druckluft gefüllt werden muss, sondern hierfür die Lufttrocknungsvorrichtung oder beide Lufttrocknungsvorrichtungen verwendet werden können.

Ein erfindungsgemäßes Verfahren zur Überwachung eines Luftversorgungssystems sowie zur Messung von Kenngrößen eines Luftversorgungssystems eines Fahrzeugs, insbesondere Schienenfahrzeugs, mit einer Überwachungs- und Messvorrichtung der vorgenannten Art, umfasst die folgenden Schritte:
a) Messen des Drucks in einem definierten Volumen mit Hilfe eines Drucksensors;
b) Pumpen von durch einen Kompressor bereitgestellter Druckluft in das definierte Volumen;
c) Bestimmen einer Druckänderung (Δp) im definierten Volumen über eine Füllzeit (ΔtFüll);
d) Prüfen, ob die Druckänderung (Δp) einen vorbestimmten, vorzugsweise linearen Verlauf aufweist.

Eine plötzliche Änderung der Druckänderung (also beispielsweise kein linearer Verlauf des Druckanstiegs oder sogar ein Druckabfall) weist auf eine Leckage, einen Ventilfehler oder einen Kolbenringverschleiß hin. Diese Anomalie ist dann sofort ersichtlich und kann als Fehler gemeldet werden.

Daher ist vorzugsweise im Verfahren ferner der Schritt e) vorhanden, in welchem ein Alarmsignal ausgegeben wird, wenn im Schritt d) kein linearer Verlauf der Druckänderung oder des Volumenstroms bestimmt wird.

Vorzugsweise ist im erfindungsgemäßen Verfahren das Volumen einer Lufttrocknungsvorrichtung das definierte Volumen, und somit kann das Messverfahren einfach in einem abgegrenzten Teil des Luftversorgungssystems integriert werden, und dieses System ist unabhängig von jeglichen Verbrauchern.

Das Verfahren könnte auch verwendet werden, um den numerischen Wert der Lieferleistung des Kompressors 2 zu messen.

Vorzugsweise wird ferner ein Volumenstrom des in das definierte Volumen strömenden Luftstroms bestimmt wird. Dies kann lediglich mit mindestens einem Drucksensor erfolgen, einer oder mehrere Volumenstromsensor(en) sind hierfür nicht erforderlich.

Im Folgenden werden bevorzugte Ausführungsformen der vorliegenden Erfindung mithilfe der beiliegenden Figuren näher erläutert.
Fig.1 ist ein Schaltbild gemäß der ersten Ausführungsform der vorliegenden Erfindung.
Fig. 2 ist ein Diagramm, welches den Druckverlauf im definierten Volumen über die Zeit darstellt.
Fig. 3 ist ein Schaltbild gemäß einer zweiten Ausführungsform der vorliegenden Erfindung.

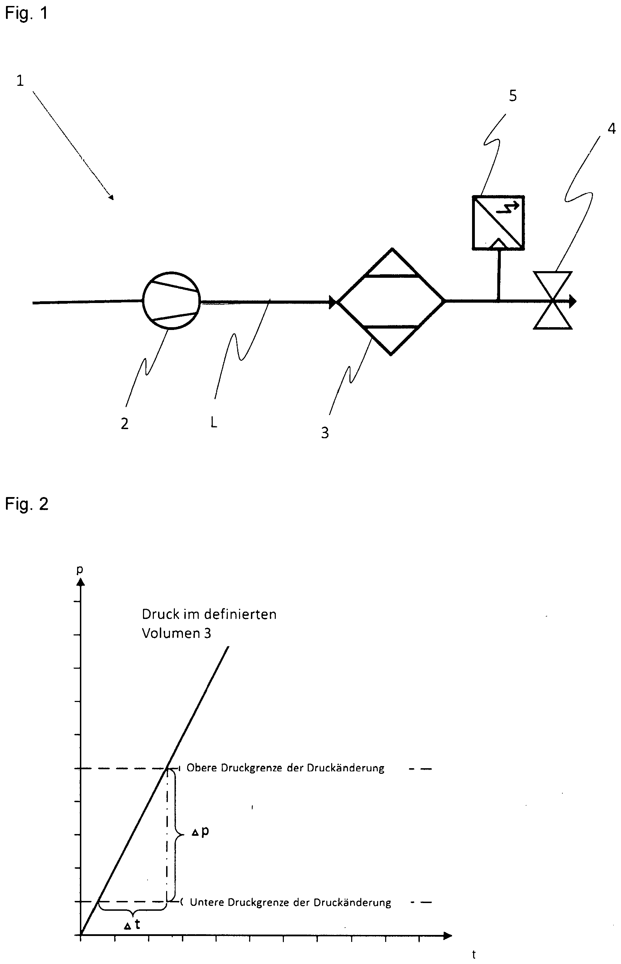

In Fig. 1 ist eine Überwachungs- und Messvorrichtung 1 gemäß der vorliegenden Erfindung gezeigt. Im Luftversorgungssystem ist ein Kompressor 2 enthalten, welcher durch eine Druckleitung L mit einem definierten Volumen 3 verbunden ist. Stromabwärts des definierten Volumens 3 ist ein Drucksensor 5 vorgesehen, und noch weiter stromabwärts ist ein Absperrventil 4 vorgesehen.

Der Kompressor 2 befördert also nun Luft durch die Druckleitung L in das definierte Volumen 3, und der Auslass des definierten Volumens 3 ist durch das Absperrventil 4 verschlossen. Mit dem Drucksensor 5 wird über die Zeit der Druck im Gesamtsystem aufgenommen. Mithilfe der Druckänderung über die Zeit kann bestimmt werden, ob eine Leckage vorliegt oder nicht, und zusätzlich wird ein Volumenstrom an Druckluft dadurch gemessen, dass der Drucksensor 5 den Druckaufbau im definierten Volumen 3 über die Zeit misst. Die gemessene Änderung des Druckaufbaus steht in direktem Zusammenhang mit dem Volumenstrom, der hieraus errechnet werden kann. Die Druckänderung ergibt sich aus dem Quotienten eines definierten Druckunterschieds Δp über die Füllzeit Δt füll. Sollte die Druckänderung nicht stetig linear sein und ggf. einem vorab bestimmten und gespeicherten Verlauf nicht entsprechen oder schwanken, kann auf eine Leckage geschlossen werden.

In Fig. 2 ist ein Druck im definierten Volumen 3 über die Zeit t aufgetragen. Wenn der Druckverlauf linear ist, steigt der Druck zwischen der unteren Druckgrenze und der oberen Druckgrenze linear an, die Druckdifferenz Δp kann dann über die Füllzeit Δt füll gemessen werden.

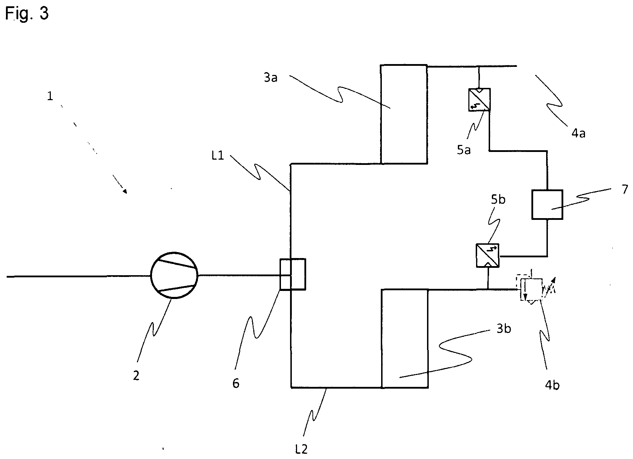

Fig.3 zeigt ein Schaltbild einer zweiten Ausführungsform der vorliegenden Erfindung. Hier ist das definierte Volumen aufgeteilt in zwei Lufttrocknungsvorrichtungen 3a und 3b. Luft aus dem Kompressor 2 wird an ein Schaltventil 6 geleitet, welches zwischen der ersten Lufttrocknungsvorrichtung 3a und der zweiten Lufttrocknungsvorrichtung 3b bzw. deren entsprechenden Druckleitungen L1 und L2 umschalten kann. Hinter der ersten Lufttrocknungsvorrichtung 3a und der zweiten Lufttrocknungsvorrichtung 3b sind jeweils ein erster Drucksensor 5a und ein zweiter Drucksensor 5b angeordnet. Hinter den Drucksensoren 5a und 5b ist dann jeweils ein Überströmventil 4a und 4b angeordnet, welches ab einem eingestellten Druckwert öffnet und Luft an Verbraucher abgeben kann. In anderen Worten wird erst bei Erreichen eines bestimmten Einstelldrucks die Verbindung zum Fahrzeug hergestellt. Bis allerdings der interne Druckaufbau in Höhe des Einstelldrucks der Überströmventile erreicht ist, liegt ein abgeschlossenes und immer gleich bleibendes Volumen vor.

Diejenige Lufttrocknungsvorrichtung 3a oder 3b, welche gerade verwendet wird, wird also als definiertes Volumen 3 verwendet. Der Kompressor 2 liefert Luft und der erste Drucksensor 5a oder der zweite Drucksensor 5b nehmen einen Druckverlauf auf. Erst wenn der vorbestimmte Einstelldruck des jeweiligen Ventils 4a und 4b erreicht ist, öffnen diese Ventile, und die Messung ist abgeschlossen.

Die gemessenen Druckwerte des ersten Drucksensors 5a und des zweiten Drucksensors 5b werden an eine Recheneinheit 7 weitergegeben.

Beim Abschalten des Kompressors 2 werden die Lufttrocknungsvorrichtungen 3a und 3b komplett entlüftet - auch diejenige Lufttrocknungsvorrichtung 3a oder 3b, welche gerade nicht in Betrieb ist und regeneriert wird. Durch die Entlüftung wird sichergestellt, dass immer derselbe Anfangsdruck vorhanden ist, und dadurch sind für eine zuverlässige Messung immer das Volumen und der Anfangsdruck bekannt.

Da das Einschalten des Luftversorgungssystems sowie ein Umschalten zwischen den Lufttrocknungsvorrichtungen 3a und 3b regelmäßig erfolgt, kann die Auswertung der Druckänderung regelmäßig und vor allem automatisiert erfolgen.

### BEZUGSZEICHENLISTE

- 1: Überwachungs- und Messvorrichtung
- 2: Kompressor
- 3: definiertes Volumen
- 3a: erste Lufttrocknungsvorrichtung
- 3b: zweite Lufttrocknungsvorrichtung
- 4: Ventil
- 4a: erstes Ventil
- 4b: zweites Ventil
- 5: Drucksensor
- 5a: erster Drucksensor
- 5b: zweiter Drucksensor
- 6: Schaltventil
- 7: Recheneinheit

- ΔtFüll: Auffüllzeit für definiertes Volumen
- L, L1, L2: Druckleitung
- L: Luftversorgungssystem

## Patentansprüche

1. Überwachungs- und Messvorrichtung (1) für eine Luftversorgungsanlage eines Fahrzeugs, umfassend:
einen Kompressor (2), welcher dazu angepasst ist, Druckluft bereitzustellen;
ein definiertes Volumen (3, 3a, 3b), welches stromabwärts vom Kompressor (2) angeordnet ist,
ein Absperrventil (4, 4a, 4b), welches stromabwärts des definierten Volumens (1) angeordnet ist,
einen Drucksensor (5, 5a, 5b), welcher an einer beliebigen Position an einer Druckleitung (L) zwischen dem Kompressor (2) sowie dem Absperrventil (4, 4a, 4b) vorgesehen ist, und dazu eingerichtet ist, den Druck, der sich im definierten Volumen (3, 3a, 3b) aufbaut, zu messen,
ferner eine Recheneinheit (6) aufweisend, welche dazu angepasst ist, auf Basis des Signals des Drucksensors (5) eine Druckänderung (Δp) über eine Füllzeit (ΔtFüll) im definierten Volumen (3, 3a, 3b) zu bestimmen,
wobei das Absperrventil (4, 4a, 4b) ein Überströmventil ist, welches dazu ausgebildet ist, ab dem Erreichen eines voreingestellten Solldrucks zu öffnen,
wobei das definierte Volumen mittels des Überströmventils vom restlichen Pneumatik-System des Fahrzeugs getrennt ist, wobei bei Erreichen eines bestimmten Einstelldrucks das Überströmventil öffnet und die Verbindung zum Fahrzeug hergestellt wird und die Messung der Druckänderung automatisch beendet wird,
sodass ein interner Druckaufbau in Höhe des Einstelldrucks des Überströmventils gemessen wird, und bis dieser erreicht ist, stets ein abgeschlossenes und gleich bleibendes Volumen vorliegt.

2. Überwachungs- und Messvorrichtung (1) gemäß Anspruch 1, wobei die Recheneinheit (6) ferner dazu angepasst ist, einen Volumenstrom des in das definierte Volumen (3) strömenden Luftstroms zu bestimmen.

3. Überwachungs- und Messvorrichtung (1) gemäß einem der vorhergehenden Ansprüche 2 oder 3, wobei die Recheneinheit (6) ferner dazu eingerichtet ist, ein Alarmsignal auszugeben, wenn die momentane Druckänderung (Δp) nicht in einem vorbestimmten Bereich befindet oder sich der Druck nichtlinear ändert.

4. Überwachungs- und Messvorrichtung (1) gemäß einem der vorhergehenden Ansprüche, wobei das vorbestimmte Volumen (3) das Volumen einer Lufttrocknungsvorrichtung (3a, 3b) ist.

5. Überwachungs- und Messvorrichtung (1) gemäß Anspruch 4, wobei durch ein Schaltventil (6) selektiv eine erste Lufttrocknungsvorrichtung (3a) oder zweite Lufttrocknungsvorrichtung (3b) mit dem Kompressor (2) verbindbar ist und als definiertes Volumen (3) fungiert, wobei stromabwärts der ersten Lufttrocknungsvorrichtung (3a) ein erstes Ventil (4a) vorgesehen ist, und zwischen dem Schaltventil (6) und dem ersten Ventil (4a) ein erster Drucksensor (5a) vorgesehen ist,
und stromabwärts der zweiten Lufttrocknungsvorrichtung (3b) ein zweites Ventil (4b) vorgesehen ist, und zwischen dem Schaltventil (6) und dem zweiten Ventil (4b) ein zweiter Drucksensor (5b) vorgesehen ist.

6. Verfahren zur Überwachung und zur Messung von Kenngrößen eines Luftversorgungssystems (L) eines Fahrzeugs, insbesondere Schienenfahrzeugs, mit einer Überwachungs- und Messvorrichtung (1) gemäß einem der Ansprüche 1 bis 5, umfassend die folgenden Schritte:
a) Messen des Drucks in einem definierten Volumen (3) mit Hilfe eines Drucksensors (5);
b) Pumpen von durch einen Kompressor (2) bereitgestellter Druckluft in das definierte Volumen (3);
c) Bestimmen einer Druckänderung (Δp) im definierten Volumen (3) über eine Füllzeit (ΔtFüll);
d) Prüfen, ob die Druckänderung (Δp) einen vorbestimmten, vorzugsweise linearen Verlauf aufweist,
wobei das definierte Volumen mittels des Überströmventils vom restlichen Pneumatik-System des Fahrzeugs getrennt ist, wobei bei Erreichen eines bestimmten Einstelldrucks das Überströmventil öffnet und die Verbindung zum Fahrzeug hergestellt wird und die Messung der Druckänderung automatisch beendet wird, sodass ein interner Druckaufbau in Höhe des Einstelldrucks des Überströmventils gemessen wird, und bis dieser erreicht ist, stets ein abgeschlossenes und gleich bleibendes Volumen vorliegt.

7. Verfahren gemäß Anspruch 6, ferner folgenden weiteren Schritt aufweisend:
e) Ausgabe eines Alarmsignals, wenn in Schritt d) kein vorbestimmter oder linearer Verlauf der Druckänderung (Ap) bestimmt wird.

8. Verfahren gemäß Anspruch 6 oder 7, wobei das definierte Volumen (3) eine Lufttrocknungsvorrichtung (3a, 3b), insbesondere eine Lufttrocknungsvorrichtung (3a, 3b) eines Schienenfahrzeugs ist.

9. Verfahren gemäß einem der Ansprüche 6 bis 8, wobei ferner ein Volumenstrom des in das definierte Volumen (3) strömenden Luftstroms bestimmt wird.

## Claims

1. A monitoring and measuring device (1) for an air supply system of a vehicle, comprising:
a compressor (2), which is adapted to provide compressed air;
a defined volume (3, 3a, 3b), which is arranged downstream of the compressor (2),
a shut-off valve (4, 4a, 4b) which is arranged downstream of the defined volume (1),
a pressure sensor (5, 5a, 5b), which is provided at any position on a pressure line (L) between the compressor (2) and the shut-off valve (4, 4a, 4b) and is configured to measure the pressure that builds up in the defined volume (3, 3a, 3b),
further having a computing unit (6) which is adapted to determine a pressure change (Δp) over a filling time (ΔtFüll) in the defined volume (3, 3a, 3b) on the basis of the signal of the pressure sensor (5),
wherein the shut-off valve (4, 4a, 4b) is a relief valve which is configured to open once a preset target pressure is reached,
wherein the defined volume is separated from the rest of the vehicle's pneumatic system by means of the relief valve, wherein, on reaching a specific set pressure, the relief valve opens and the connection to the vehicle is established, and the measurement of the pressure change is automatically terminated, so that an internal pressure build-up equal to the set pressure of the relief valve is measured, and until this is reached, a closed and constant volume is always maintained.

2. The monitoring and measuring device (1) as claimed in claim 1, wherein the computing unit (6) is further adapted to determine a volumetric flow rate of the air flow flowing into the defined volume (3).

3. The monitoring and measuring device (1) as claimed in one of the preceding claims 2 or 3, wherein the computing unit (6) is further configured to output an alarm signal if the instantaneous pressure change (Δp) is not within a predetermined range or if the pressure changes non-linearly.

4. The monitoring and measuring device (1) as claimed in one of the preceding claims, wherein the predetermined volume (3) is the volume of an air drying device (3a, 3b).

5. The monitoring and measuring device (1) as claimed in claim 4, wherein a first air drying device (3a) or second air drying device (3b) is selectively connectable to the compressor (2) by a switching valve (6) and acts as a defined volume (3), wherein a first valve (4a) is provided downstream of the first air drying device (3a), and a first pressure sensor (5a) is provided between the switching valve (6) and the first valve (4a),
and a second valve (4b) is provided downstream of the second air drying device (3b), and a second pressure sensor (5b) is provided between the switching valve (6) and the second valve (4b).

6. A method for monitoring and measuring parameters of an air supply system (L) of a vehicle, in particular a rail vehicle, comprising a monitoring and measuring device (1) according to any one of claims 1 to 5, comprising the following steps:
a) measuring the pressure in a defined volume (3) using a pressure sensor (5);
b) pumping compressed air provided by a compressor (2) into the defined volume (3);
c) determining a pressure change (Δp) in the defined volume (3) over a filling time (ΔtFüll);
d) checking whether the pressure change (Δp) has a predetermined, preferably linear progression,
wherein the defined volume is separated from the rest of the vehicle's pneumatic system by means of the relief valve, wherein, on reaching a specific set pressure, the relief valve opens and the connection to the vehicle is established, and the measurement of the pressure change is automatically terminated, so that an internal pressure build-up equal to the set pressure of the relief valve is measured, and until this is reached, a closed and constant volume is always maintained.

7. The method as claimed in claim 6, also having the following further step:
e) outputting an alarm signal if no predetermined or linear progression in the pressure change (Δp) is determined in step d).

8. The method as claimed in claim 6 or 7, wherein the defined volume (3) is an air drying device (3a, 3b), in particular an air drying device (3a, 3b) of a rail vehicle.

9. The method as claimed in any one of claims 6 to 8, wherein a volumetric flow rate of the air flow flowing into the defined volume (3) is further determined.

## Revendications

1. Dispositif de surveillance et de mesure (1) pour une installation d'alimentation en air d'un véhicule comprenant :
un compresseur (2) qui est adapté afin de fournir de l'air comprimé ;
un volume défini (3, 3a, 3b) qui est disposé en aval du compresseur (2),
une soupape d'arrêt (4, 4a, 4b) qui est disposée en aval du volume défini (1),
un capteur de pression (5, 5a, 5b) qui est prévu dans une position quelconque au niveau d'une ligne de pression (L) entre le compresseur (2) et la soupape d'arrêt (4, 4a, 4b) et est conçu afin de mesurer la pression qui s'accumule dans le volume défini (3, 3a, 3b),
présentant de plus une unité de calcul (6) qui est adaptée afin de déterminer, sur la base du signal du capteur de pression (5), une modification de pression (Δp) pendant un temps de remplissage (ΔtFüll) dans le volume défini (3, 3a, 3b),
dans lequel la soupape d'arrêt (4, 4a, 4b) est une soupape de trop-plein qui est réalisée afin de s'ouvrir dès qu'une pression de consigne prédéfinie est atteinte,
dans lequel le volume défini est séparé du système pneumatique restant du véhicule au moyen de la soupape de trop-plein, dans lequel lorsque la pression de réglage déterminée est atteinte, la soupape de trop-plein s'ouvre et la liaison avec le véhicule est établie, et la mesure de la modification de pression est automatiquement terminée, de sorte qu'une accumulation de pression interne soit mesurée à hauteur de la pression de réglage de la soupape de trop-plein, et jusqu'à ce que celle-ci soit atteinte, il y ait toujours un volume fermé et constant.

2. Dispositif de surveillance et de mesure (1) selon la revendication 1, dans lequel l'unité de calcul (6) est de plus adaptée afin de déterminer un débit volumétrique du courant d'air circulant dans le volume défini (3).

3. Dispositif de surveillance et de mesure (1) selon l'une quelconque des revendications précédentes 2 ou 3, dans lequel l'unité de calcul (6) est de plus conçue afin d'émettre un signal d'alarme lorsque la modification de pression (Δp) momentanée ne se trouve pas dans une plage prédéterminée ou lorsque la pression se modifie de manière non linéaire.

4. Dispositif de surveillance et de mesure (1) selon l'une quelconque des revendications précédentes, dans lequel le volume prédéterminé (3) est le volume d'un dispositif de séchage d'air (3a, 3b).

5. Dispositif de surveillance et de mesure (1) selon la revendication 4, dans lequel sélectivement un premier dispositif de séchage d'air (3a) ou un second dispositif de séchage d'air (3b) peut être relié au compresseur (2) par une soupape de commutation (6) et fonctionne comme volume défini (3), dans lequel une première soupape (4a) est prévue en aval du premier dispositif de séchage d'air (3a), et un premier capteur de pression (5a) est prévu entre la soupape de commutation (6) et la première soupape (4a),
et une seconde soupape (4b) est prévue en aval du second dispositif de séchage d'air (3b), et un second capteur de pression (5b) est prévu entre la soupape de commutation (6) et la seconde soupape (4b).

6. Procédé de surveillance et de mesure de grandeurs caractéristiques d'un système d'alimentation en air (L) d'un véhicule, en particulier d'un véhicule ferroviaire, avec un dispositif de surveillance et de mesure (1) selon l'une quelconque des revendications 1 à 5, comprenant les étapes suivantes :
a) mesure de la pression dans un volume défini (3) à l'aide d'un capteur de pression (5) ;
b) pompage d'air comprimé fourni par un compresseur (2) dans le volume défini (3) ;
c) détermination d'une modification de pression (Δp) dans le volume défini (3) pendant un temps de remplissage (ΔtFüll) ;
d) vérification établissant si la modification de pression (Δp) présente une courbe prédéterminée, de préférence linéaire,
dans lequel le volume défini est séparé du système pneumatique restant du véhicule au moyen de la soupape de trop-plein, dans lequel lorsque la pression de réglage déterminée est atteinte, la soupape de trop-plein s'ouvre et la liaison avec le véhicule est établie, et la mesure de la modification de pression est automatiquement terminée, de sorte qu'une accumulation de pression interne soit mesurée à hauteur de la pression de réglage de la soupape de trop-plein, et jusqu'à ce que celle-ci soit atteinte, il y ait toujours un volume fermé et constant.

7. Procédé selon la revendication 6, présentant de plus l'autre étape suivante :
e) émission d'un signal d'alarme lorsqu'aucune courbe prédéterminée ou linéaire de la modification de pression (Ap) n'est déterminée à l'étape d).

8. Procédé selon la revendication 6 ou 7, dans lequel le volume défini (3) est un dispositif de séchage d'air (3a, 3b), en particulier un dispositif de séchage d'air (3a, 3b) d'un véhicule ferroviaire.

9. Procédé selon l'une quelconque des revendications 6 à 8, dans lequel un débit volumétrique du courant d'air circulant dans le volume défini (3) est de plus déterminé.
